# EUROPÄISCHE PATENTANMELDUNG

(11) **EP 2 263 503 A2**
(43) Veröffentlichungstag der Anmeldung: **22.12.2010**
(21) Anmeldenummer: 10006127.4
(22) Anmeldetag: 14.06.2010
(51) Int. Cl.: A47J 31/60, C02F 1/00, C02F 1/42

(54) **Teeaufbereitungsgerät mit einem Wassertank und einem darin befindlichen Wasserfilter mit wasserstoffförmigen Kationentauscher**

(30) Priorität: 15.06.2009 DE 102009025280; 19.05.2010 DE 102010020946
(71) Anmelder: Aquis Wasser-Luft-Systeme GmbH Lindau, Zweigniederlassung Rebstein, 9445 Rebstein (CH)
(72) Erfinder: Scholz, Roland, 9436 Balgach (CH); Heitele, Bernd, 9437 Marbach (CH)
(74) Vertreter: Roth, Klaus

(57) **Zusammenfassung**

Die vorliegende Erfindung betrifft ein Teeaufbereituncsgerät mit einem Wassertank und einem darin befindlichen Wasserfilter mit einem Gehäuse und einem darin angeordneten Filtermaterial. Dieser Wasserfilter zeichnet sich erfingdungsgemäß dadurch aus, dass das Filtermaterial einen ersten, schwach sauren Kationentauscher in Wasserstoffform umfasst, der 30-70 % des Volumens an Tonenaustauschermaterial einnimmt und mindestens einen zweiten Kationentauscher in Natrium- oder Kaliumform umfasst, wobei das Filtermaterial in mindestens einer Filterkanmer angeordnet ist.

## Beschreibung

Die Erfindung betrifft ein Teeaufbereitungsgerät mit einem Wassertank und einem darin befindlichen Wasserfilter nach den Oberbegriffen der Ansprüche 1 und 15.

### Stand der Technik:

Handelsüblich sind Heissgetränkeaufbereitungsgeräte mit einem Wassertank und einer darin befindlichen Wasserfilterpatrone zur Aufbereitung von Trinkwasser für die Bereitung von Getränken und Speisen bekannt. In der Regel umfassen die Filterpatronen ein nit Filtermaterial gefülltes Gehäuse und sind insbesondere zum Einsatz in ein Tanksystem für nicht an Wasserleitungssysteme angebundene Geräte ausgebildet.

Die Aufbereitung des im Tank vorgehaltenen Rohwassers erfolgt üblicherweise während des Durchflusses durch das im Wasserfilter angeordnete Filtermaterial. Bekannt sind auch Ausführungsformen, bei denen die Menge zu entnehmenden, aufbereitenden Wassers entweder im Wesentlichen dem im Filter befindlichen Wasservolumen entspricht oder auch ein solches Volumen für bereits aufbereitetes Wasser zwischen Filterstrecke und Entnahmestelle vorgesehen ist, so dass die zu reinigende Menge an Rohwasser länger mit dem Filtermaterial in Kontakt ist und dadurch zur Erzielung einer besseres Wasserqualität intensiver gereinigt werden kann.

### Aufgabe und Vorteile der Erfindung:

Der vorliegenden Erfindung liegt die Aufgabe zugrunde, ein Teeaufbereitungsgerät mit einem Wassertank und einen darin befindlichen Wasserfilter, sowie einen Wasserfilter der eingangs beschriebenen Art weiter zu verbessern.

Die Lösung dieser Aufgabe erfolgt ausgehend von den Oberbegriffen der Ansprüche 1 und 15 durch deren kennzeichnende Merkmale.

In den Unteransprüchen sind zweckmäßige und vorteilhafte Weiterbildungen angegeben.

Dementsprechend betrifft die vorliegenden Erfindung ein Teeaufbereitungsgerät mit einem Wassertank und einen darin befindlichen Wasserfilter mit einem Gehäuse und einem darin angeordneten Filtermaterial. Dieser Wasserfilter zeichnet sich erfindungsgemäß dadurch aus, dass das Filtermaterial einen ersten, schwach sauren Kationentauscher in Wasserstoffform umfasst, der 30-70 % des Volumens an Ionenaustauschermaterial einnimmt und mindestens einen zweiten Kationentauscher in Natrium- oder Kaliumform umfasst, wobei das Filtermaterial in mindestens einer Filterkammer angeordnet ist.

Durch diese Kombination von Filtermaterial ist eine sehr umfassende, aber dennoch ganz gezielte Enthärtung des Rohwassers in Bezug auf bestimmte Anwendungsfälle möglich. Beispielsweise kann damit der Karbonathärteanteil im Wasser stark reduziert werden, wohingegen der Permanenthärteanteil vergleichsweise gering, mittel oder sogar stark aus dem Wasser herausgefiltert wird. Dies wirkt sich insbesondere bei geschmackssensitiven Anwendungsfällen und bei Speisewässern mit hohem Permanenthärteanteil positiv aus, wie es z. B. bei der Aufbereitung von Tee der Fall ist.

In einer bevorzugten Ausführungsform nimmt der erste, wasserstoffförmige schwach saure Kationentauscher ein Volumen von 30 % bis 70 % des durch die Ionenaustauscher eingenommenen Volumens ein. Dieses Volumenverhältnis hat sich als besonders vorteilhaft in Bezug auf eine bestimmte Geschmacksverbesserung erwiesen, insbesondere in Kombination mit einem hohen Schutzvermögen für Kesselsteinausfällung.

Schwachsaure Ionenaustauscher besitzen aktive Gruppen, welche überwiegend als Carboxylgruppen ausgebildet sind. Bei stark sauren Kationentauschern kommen hingegen überwiegend Sulfonsäuregruppen als aktive Gruppen zum Einsatz.

Weiterhin kann das Ionentauschermedium aus einem Gemisch aus stark sauren und schwach sauren Kationentauschertypen bestehen, wobei überwiegend ein schwach saurer Tauscher im Gemisch eingesetzt wird.

Um eine besonders effektive Ausführung zu erhalten, hat sich gezeigt, dass im Gemisch die Summe der aktiven Gruppen zu 30-70 % in Wasserstoffform, d. h. mit Wasserstoffionen, belegt sind.

Unter Summe der aktiven Gruppen versteht man die Summe der vorhandenen totalen Tauschkapazität der Einzelkomponenten der Ionentauschermischung.

Weiterhin ist es besonders vorteilhaft, wenn bis zu 70 % der Summe der aktiven Gruppen im Gemisch mit Natrium und/oder Kalium beladen bzw. belegt sind.

Durch das Vorsehen eines Wasserfilters in einem Wassertank ist das Filtermaterial ständig in Kontakt mit dem zu filternden Wasser, sodass dieses insbesondere aufgrund einer langen Einwirkzeit besonders gut und intensiv aufbereitet werden kann, was einen wesentlichen Vorteil bei der Teeaufbereitung darstellt. Denn, je besser das zur Zubereitung von Tee verwendete Trinkwasser durch die Filterpatrone aufbereitet ist, desto besser können sich die Geschmachsstoffe, Aromen und Farbstoffe des Tees ausbilden.

Ein weiterer Vorteil der Anordnung eines Filters in einem Wassertank liegt in der Vermeidung des Austrocknens des Filtermaterials. Dies kann insbesondere vorteilhaft durch einen in der Formgebung verhältnismäßig flachen Filter erreicht werden, bei dem in entsprechender weise das Filtermaterial in einem vergleichsweise sehr breiten, zu hohen Verhältnis in der Filterkartusche bzw. in deren Gehäuse angeordnet ist und daher auch bei niedrigem Wasserstand im Tank immer noch mit Wasser bedeckt, zumindest jedoch sehr gut durchfeuchtet ist.

In weiter vorteilhafter Weise kann eine Vermeidung des Austrocknens des Filtermaterials durch die Anordnung der Filterkartusche in einer Vertiefung im Tankboden bewirkt werden. Hierdurch steht die Filterpatrone und damit auch das darin befindliche Filtermaterial auch dann noch im aufzubereitenden Trinkwasser, wenn der Tank an sich bereits leer ist.

Eine besonders gute Filterwirkung kann dadurch erreicht werden, wenn ein sehr hoher Füllgrad an Filtermaterial im Gehäuseinneren vorliegt. So wurde beispielsweise herausgefunden, dass ab einem Füllgrad von etwa ≥ 90 % des Innenvolumens des Filtergehäuses, insbesondere ab einem Füllgrad von ≥ etwa 95 % eine deutlich verbesserte Filterwirkung erzielt werden kann. Dies wird auf einen Komprimierungseffekt zurückgeführt, der sich insbesondere durch festes Umschließen des Filtermaterials durch das das Filtermaterial umgebende Gehäuse erreicht werden kann.

Als insbesondere vorteilhaft hatte sich hierbei herausgestellt, wenn das in das Filtergehäuse einzufüllende Filtermaterial noch zusätzlich komprimiert wird. Eine solche Komprimierung kann z. B. durch das Innenvclumen des Filtergehäuses reduzierende Mittel bewirkt werden. Beispielsweise durch beim Zusammenfügen des Gehäuses in das Innenvolumen einzubringende Verdichtungsmittel, wie z. B. weitere Gehäuseteile. Zum Beispiel können dies Trennwände oder dergleichen und/oder Einbuchtungen und/oder Wölbungen sein, die insbesondere vorteilhaft an einem Gehäuseteil ausgebildet sind, welches nach bestmöglicher Füllung des ersten Gehäuseteils mit Filtermaterial beim Zusammenfügen zweier solcher Gehäuseteile das Innenvolumen durch ihr Eindringen reduzieren. Beispielsweise ist eine Komprimierung eines mit einer mit Filtermaterial befüllten Gehäusewand versehenen Deckels oder Bodens durch Aufpressen eines komplementären Bodens oder Deckels mit einem in das Gehäuseinnere hineinragenden Filterablaufelement möglich. Eine zusätzliche Komprimierung kann durch zusätzlich vorgesehene, das Innenvolumen zusätzlich reduzierende Trennwände erreicht werden.

Eine besonders hohe Filterwirkung kann dabei für einen Wasserfilter erreicht werden, der einen entsprechend hohen Füllgrad an Filtermaterial im Innenvolumen des Filtergehäuses aufweist und zusätzlich ständig in Wasserkontakt ist.

Weiter vorteilhaft kann die Filterkombination so zusammengesetzt sein, dass sie im Verlauf der Austauschreaktion ihr Volumen verändert. Je nach Ausgangsdotierung eines beispielsweise hierfür verwendeten Ionentauscherharzes schrumpft oder quillt das Filtermaterial im Laufe seiner Betriebsdauer.

Je nach Aufbau des Wasserfilters kann diese Eigenschaft des Filtermaterials für die Qualität des durch das Filtermaterial gefilterten Wassers in verbessernder Weise genutzt werden. Wenn z. B. das Filtermaterial, bestehend aus Kationentauschern, in einer im Abstrom betriebenen Filterkammer angeordnet ist, erfolgt durch Schrumpfen des Ionentauscherharzes eine Verdichtung, also eine Komprimierung des Filterbettes, so dass dadurch das durch das Filterbett hindurch fließendes Wasser in besseren Kontakt mit dem Filtermaterial kommt und dadurch vergleichsweise besser gereinigt wird als beim weniger starken Kontakt mit dem Ionentauscherharz zu Beginn der Filterbetriebslaufzeit. Dies hat zur Folge, dass die aufgrund der Komprimierung des Filterbettes verbesserte Filterreinigung zumindest ein Stück weit der zwangsweise während der Betriebslaufzeit sich reduzierenden Filterwirkung entgegenwirkt und der so aufgebaute Wasserfilter über einen vergleichsweise längeren Zeitraum hinweg eine konstantere Filterwirkung für das durch ihn gefilterte Rohwasser bewirken kann.

Voraussetzung für die Nutzung von Komprimierungseffekten durch Ionenaustauscher während des Betriebs von Wasserfilterpatronen ist eine feste Umschließung des Filtermaterials durch das Gehäuse. Fest heißt z. B, dass der Füllgrad der Patrone nach der Befüllung und dem Fügen der Gehäuseteile so ausgelegt ist, dass weniger als etwa 10 %, insbesondere weniger als 5 % freier Raum innerhalb der Patrone für das Filtermedium verbleibt.

Für den Füllvorgang ist ein sogenannter Freibord, d. h. ein nicht befüllter Überstand des Gehäuses von z. B. ca. 1 bis 5 mm von Vorteil. Um einen solchen Freibord unter Beibehaltung des gewünschten Füllgrads einzuhalten, können zusätzliche Maßnahmen erforderlich werden.

Um die Fixierung des Filtermaterials zu erreichen, können beispielsweise in der Gehäusekonstruktion Verdrängungskörper vorgesehen werden, welche beim Fügen von Deckel und Becher Filtermaterial verdrängen. Die Verdrängungskörper befinden sich bevorzugt in dem Gehäuseteil, welches zuletzt beim Verschließen der Kartusche aufgesetzt wird. Bei Kartuschen, die über den Becher befüllt werden, befinden sich die im Verdrängungskörper im Verschlussdeckel. Bei Kartuschen, die über den Deckel, d. h. auf den Kopf gestellt, befüllt werden, befinden sich die Verdrängungskörper im Becher (in Betriebsstellung dann Kartuschenunterteil). Mit derartigen Maßnahmen kann der gewünschte Füllgrad auch bei flachen Patronen, deren Filtervolumen beispielsweise ein Höhe zu Breiteverhältnis von kleiner als 1 und/oder eine Betthöhe kleiner 8 cm aufweisen, hergestellt werden.

Der Verdrängungskörper kann dabei so ausgeführt werden, dass sich zwei oder mehr getrennte Filterkammern bilden, welche eine Verlängerung der Filterstecke erlauben.

Eine Verbesserung dieser vorteilhaften Wirkung kann beispielsweise dadurch erzielt werden, dass zusätzliches Filtermaterial aus einer z. B. stromaufwärts gelegenen Filterkammer, beispielsweise einer Aufstromkammer bei der Volumenreduzierung des in der Abstromkammer befindlichen Filtermaterials in diese nachströmt und so das "Leervolumen" der im Abstrombetrieb arbeitenden Filterkammer auffüllt, das Filterbett wieder verlängert und als weiteres Komprimierungsmittel auf das schrumpfende Ionentauscherharz wirkt. Sein Komprimierungseffekt wird durch die von der Durchflusssträmung des Rohwassers erzeugte Strömungskraft zusätzlich verstärkt. Das durchfließende Wasser wirkt damit zusätzlich als Komprimierungsmittel.

Bei einer demgegenüber quellenden Eigenschaft des Filtermaterials, bestehend aus Ionentauscherharz, dehnt sich das damit gebildete Filterbett aus und kann beispielsweise ebenfalls als Komprimierungsmittel z. B. für sich selbst, aber auch für ein komplementäres Filtermaterial, dadurch genutzt werden, dass es den Volumenverlust der komplementären Filterkammer ausgleicht, dadurch dessen Filterbett verlängert und dieses durch seine eigene Volumenexpansion zusammendrückt.

In einer besonders bevorzugten Ausführungsform ist für eine Kombination zwischen einem Filtermaterial mit quellender Wirkung und einem Filtermaterial mit schrumpfender Wirkung das Verhältnis der Materialanteile so aufeinander abgestimmt, dass die Volumenreduzierung im Schrumpfharz gleich oder etwas geringer ist als die Volumenvergrößerung des Quellharzes. Auch durch diese Abstimmung ist eine Auspegelung der Filterwirkung auf eine vergleichsweise gleich bleibende Reinigungswirkung über einen längeren Filterbetriebszeitraum möglich, als dies ohne Filterbettkomprimierung der Fall wäre.

In besonders bevorzugter Weise ist das Volumen der im Abstrom arbeitenden Filterkammer größer 40 % als das aus Aufstrom- und Abstromfilterkammer gebildete Gesamtvolumen.

In einer weiter bevorzugten Ausführungsform sind der erste Kationentauscher und/oder der zweite Kationentauscher jeweils unvermischt in einer gegebenenfalls jeweils getrennt ausgebildeten Filterkammer angeordnet. Hierdurch kann beispielsweise die oben beschriebene Wirkungsweise der Komprimiermittel in ihren einzelnen Volumina genau bestimmt werden. Die Nachförderung oder das Nachdosierung bzw. Weiterauffüllen der Filterkammer, in welcher das Filtermaterial mit schrumpfenden Eigenschaften angeordnet ist, kann dann im Nachschubverfahren aus der stromaufwärts gelagerten Kammer in die stromabwärts gelagerte Kammer erfolgen.

Bei Ausführungsformen, bei denen der erste und der zweite Kationentauscher z. B. gemischt in einer oder mehreren Filterkammern angeordnet sind, kann das Mischungsverhältnis wiederum entweder vorteilhafterweise so festgelegt sein, dass sich die Volumenreduzierung durch das schrumpfende Ionentauscherharz durch die Volumenerhöhung des quellenden Ionentauscherharzes ausgleicht oder dieses gegebenenfalls sogar leicht übertroffen und dadurch das Filtermaterial komprimiert wird. In diesem Fall kann ebenfalls ein zumindest über einen bestimmten Betriebszeitraum hinweg in der Filterwirkung ein konstanter Wasserfilter realisiert werden als er vergleichsweise durch eine nicht erfolgte Komprimierung realisierbar ist.

Sofern das durch die Quellwirkung zusätzlich eingenommene Volumen geringer ist als das durch die Schrumpfwirkung des anderen Kationentauschers, ist es wiederum vorteilhaft, wenn aus einer stromaufwärts ausgebildeten zweiten Filterkammer Filtermaterial in die stromabwärts gelagerte, sich im Filtervolumen reduzierende Filterkammer hinein verbringt und damit das ursprünglich darin befindliche Filtermaterial zusätzlich komprimiert und somit ebenfalls eine Verbesserung der Filterwirkung bewirkt.

Das bedeutet also, dass einer der beiden Kationentauscher als Komprimierungsmittel für die durch ihn und/oder durch den anderen Kationentauscher gebildete Filterstrecke wirksam ist. Das Filtermaterial in einer ersten Filterkammer kann dabei in besonders vorteilhafter Weise so angeordnet sein, dass es bei einer Volumenreduzierung des Filtermaterials in einer zweiten Filterkammer zur Wiederauffüllung des Volumens der zweiten Filterkammer Filtermaterial in die zweite Filterkammer nachgefüllt wird.

Als insbesondere vorteilhaft wird es angesehen, wenn ein Überlauf zwischen der ersten Filterkammer und der zweiten Filterkammer so ausgebildet ist, dass bei einer Volumenreduzierung des Filtermaterials in der zweiten Filterkammer zur Wiederauffüllung des Volumens dieser zweiten Filterkammer Filtermaterial aus der ersten Filterkammer in die zweite Filterkammer umgefüllt wird, so dass beispielsweise o. a. Komprimierungseffekte erzielt werden können.

Die Komprimierung des Filterbettes im Lauf seiner Betriebsdauer zur damit einhergehenden, vergleichsweise erhöhten Filterwirkung, also Verbesserung der Filterwirkung im Vergleich zu einem loseren Anordnungszustand des Filtermaterials, und damit einer zeitlichen Hinauszögerung der im Lauf der Filterbetriebszeit eintretenden Reduzierung der Filterwirkung kann sowohl mit einem Filtermaterial erzielt werden, das im Verlauf der Austauschreaktion sein Volumen reduziert als auch mit einem Filtermaterial, das im Verlauf der Austauschreaktion sein Volumen erhöht. Aber auch mit einer Filtermaterialkombination, bei der einzelne Filtermaterialkomponenten die eine bzw. die andere Volumenänderung zeigen, ist eine derartige Verbesserung der Filterwirkung möglich.

### Ausführungsbeispiel:

Nachfolgend wird unter Bezugnahme auf die beigefügten Figuren ein Ausführungsbeispiel näher beschrieben.

Es zeigen
- Fig. 1: beispielhaft und schematisch als perspektivische Ansicht von schräg unten einen Wasserfilter;
- Fig. 2: einen Längsschnitt durch den Wasserfilter nach Figur 1;
- Fig. 3: einen Querschnitt durch den Wasserfilter nach Figur 1;
- Fig. 4-6: vergrößerte, ausschnittsweise Darstellungen aus einem Längsschnitt durch den Wasserfilter nach Figur 1;
- Fig. 7: ein Teeaufbereitungsgerät mit einem Wassertank und einem darin befindlichen Wasserfilter.

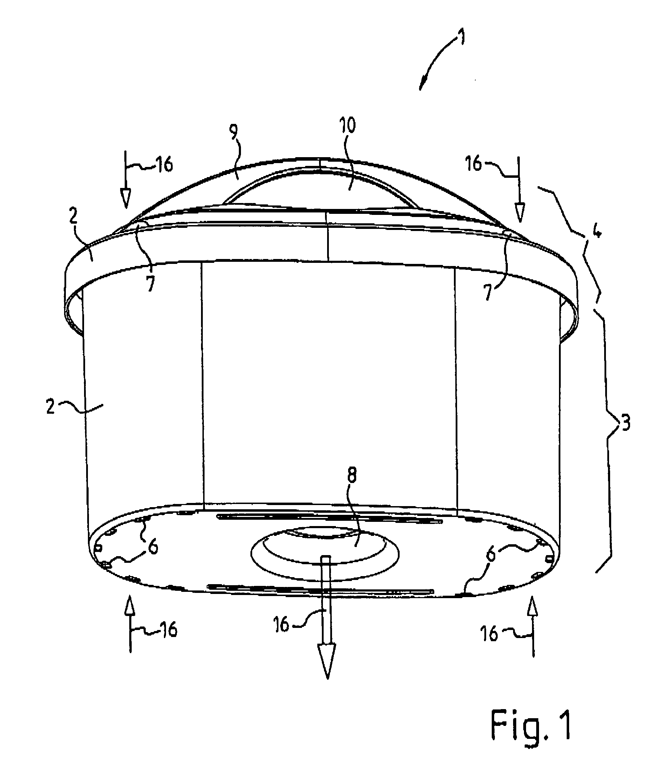

In diesem Sinne zeigt die Figur 1 einen zum Einsatz in einen Wassertank eines Teeaufbereitungsgerätes 30 vorgesehenen Wasserfilter 1 mit einem Gehäuse 2 und einem darin angeordneten Filtermaterial. Das Gehäuse 2 umfasst ein becherförmiges Unterteil 3, ein darauf aufgesetztes Oberteil 4 und eine im Inneren angeordnete Innenkammer 5 (nicht dargestellt).

Für den Zufluss des zu filternden Wassers in den Wasserfilter sind beispielhaft und schematisch sowohl untere Einlassöffnungen 6 als auch obere Einlassöffnungen 7 am Gehäuse 2 ausgebildet. Der Austritt für das gefilterte Wasser erfolgt durch die Auslassöffnung 8. Zur besseren Handhabung des Wasserfilters ist im Weiteren ein Handhabungselement 9 vorgesehen, hier beispielhaft als am Deckel ausgebildeter Griff 9 mit Greiföse 10. Die Verbindung des Oberteils 4 mit dem Unterteil 3 ist vorzugsweise dichtend und kann insbesondere bevorzugt durch eine Schweißung realisiert sein. Denkbar sind aber auch Kleb-, Klemm-, Schraub-, Steckverbindungen und dergleichen mehr.

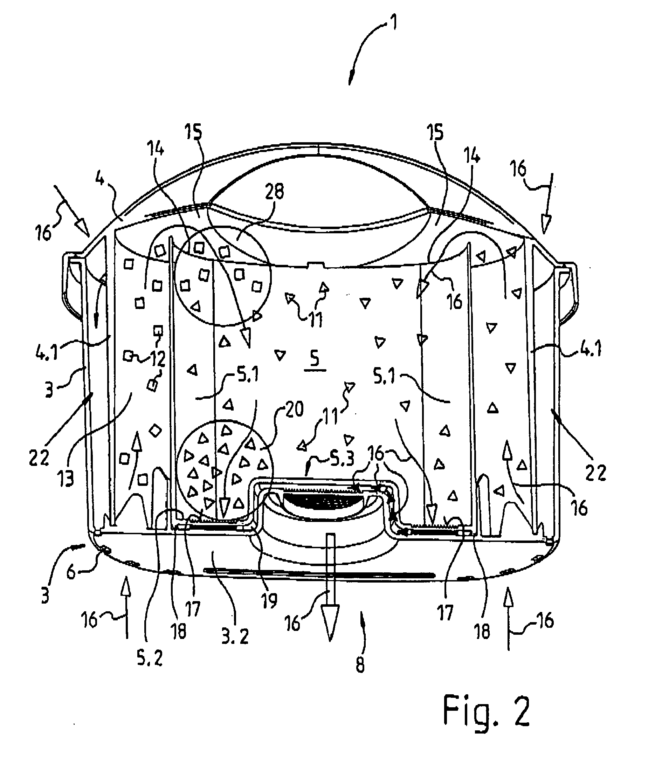

In der beispielhaften und schematischen Längsschnittdarstellung entsprechend der Figur 2 ist im Inneren des Gehäuses die Innenkammer 5 mit ihrer ovalen, hälftigen Wand 5.1 dargestellt. Der Boden 5.2 der Innenkammer ist so ausgebildet, dass durch eine Wölbung 5.3 nach innen zusammen mit der Wand 5.1 eine Verdrängung des Filtermaterials mit Komprimierung stattfindet, sobald Deckel und Boden in den mit Filtermaterial gefüllten Deckel bei der Montage von oben eingesteckt werden.

Die Befüllung findet in Bezug zur dargestellten Betriebsposition auf den Kopf gestellt statt, so dass der Deckel zur Befüllung ein becherförmiges Unterteil 4 und das den Boden umfassende Teil zur Befüllung das Oberteil 3 bilden.

Ziel hierbei ist es, bereits mit einer annähernd vollständigen Befüllung des becherförmigen Unterteils 4 mit Filtermaterial und einem Aufsetzen des Oberteils 3 einen Füllgrad bei geschlossener Filterpatrone von ≥ etwa 90 %, insbesondere ≥ 95 % zu erreichen. Hierdurch kann eine verbesserte Filterwirkung gegenüber vergleichsweise lose vorgehaltenen Filtermaterial erreicht werden. Die Ursache hierfür wird einer gewissen Komprimierwirkung aufgrund des hohen Füllgrades und einem damit entsprechend einhergehenden, geringen Leervolumen zugeschrieben.

Eine Erhöhung des Füllvolumens kann durch das Einbringen von Verdrängungsvolumen in das zuvor vollständig mit Filtermaterial befüllte Innenvolumen des Filtergehäuses in weiter vorteilhafter Weise bewirkt werden. Rein beispielhaft sei hier auf die nach innen gerichtete Wölbung 5.3 des in Füllstellung das Oberteil bildende Filtergehäuseelementes verwiesen, welches in Betriebsstellung den Boden des fertigen Filters bildet.

Die Innenkammer 5 bildet eine im Betrieb vom Wasser von oben nach unten durchflossene Abstromkammer 5 aus, in der Filtermaterial 11, beispielhaft als kleine Dreiecke dargestellt, angeordnet ist. Hierbei kann es sich beispielsweise um einen ersten, schwach sauren Kationentauscher in Wasserstoffform handeln. Ein zweiter Kationentauscher, beispielsweise als Natrium- oder Kaliumform ist beispielhaft in der Form von kleinen Rechtecken 12, in der die Abstromkammer 5 umgebenden Aufstromkammer 13 angeordnet dargestellt. Diese Aufstromkammer 13 wird durch die Wand 5.1 der Innenkammer und die Wand 4.1 des Oberteils gebildet. Ein Überlauf zwischen der Aufstromkammer 13 und der Abstromkammer 5 wird durch einen Dom 15 ausgebildet, der sich über der Oberkante 14 der Wandung 5.1 der Innenkammer erstreckt. Zur Veranschaulichung des Wasserflusses im Filter sind entsprechende Pfeile 16 beispielhaft und schematisch dargestellt.

Als Beispiel einer Verdichtung des ersten, schwach sauren Kationentauschers 12 im Laufe der Betriebszeit des Wasserfilters ist im linken unteren Bereich der Innenkammer 5 ein Verdichtungsbereich kreisförmig eingegrenzt dargestellt. Hierin sind die beispielhaft als Dreiecke angeordneten Kationenelemente deutlich dichter gezeigt, als vergleichsweise im übrigen Filterbett der Abstromkammer 5, sodass sich hierdurch ein höherer Durchflusswiderstand für das zu filternde Wasser ergibt und dieses durch den dadurch bedingten, intensiveren Kontakt mit dem Kationentauscher vergleichsweise besser gereinigt wird als während der loseren Anordnung der einzelnen Kationentauscher 12 zu Beginn der Filterbetriebszeit.

Durch das Absinken des oberen Randes der Filterbettschüttung in der Kammer 5 aufgrund der betriebszeitbedingten Verdichtung kann der zweite Kationentauscher, beispielhaft als Rechtecke 12 in der Aufstromkammer 13 dargestellt, über den Überlauf 14 in die Abstromkammer 5 nachströmen und so zusätzlich für eine Verdichtung bzw. Komprimierung des ersten Kationentauschers und somit für eine weitere Verbesserung der Reinigungswirkung sorgen, wie dies beispielhaft durch den eingekreisten Bereich 28 zur Darstellung eines Komprimierungsmittels links oben in der Innenkammer 5 gezeigt ist.

Der Abfluss aus dem Wasserfilter erfolgt in der Innenkammer durch die beiden Auslassöffnungen 17, die bevorzugt siebartig ausgebildet sind oder ein Sieb aufweisen, um den Kationentauscher im Inneren der Abstromkammer zurückzuhalten.

Ein Distanzstück 18, z. B. in der Form eines Steges, beabstandet den Boden 5.2 der Innenkammer 5 vom Boden 3.2 des Unterteiles 3, sodass dadurch zwischen diesen beiden ein Kanal 19 zur Führung des gefilterten Wassers hin zur Auslassöffnung 8 im Boden des Unterteils 3 ausgebildet ist. Rein schematisch und symbolisch sind für diesen Wasserlauf in der rechten Bildhälfte 5 ausgefüllte Pfeilspitzen 16 dargestellt.

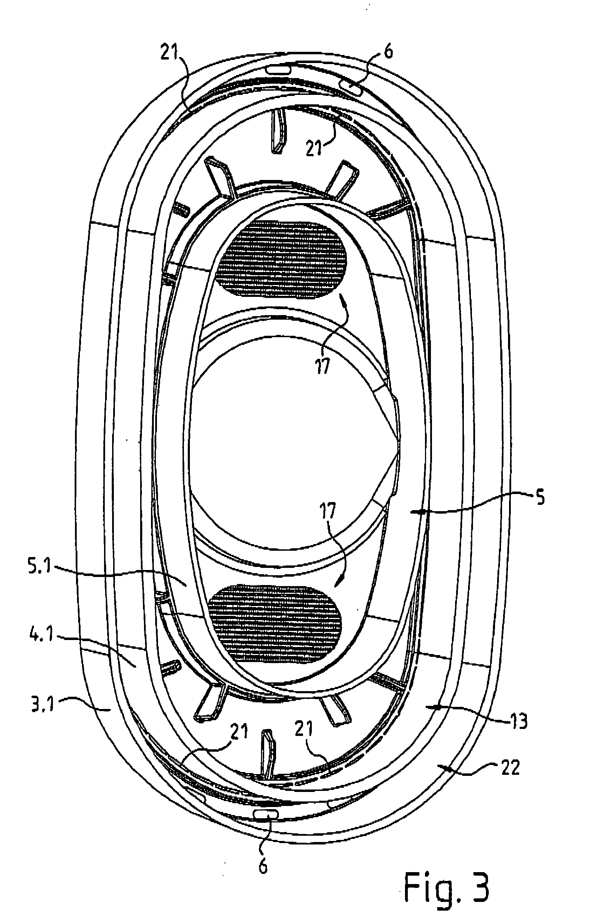

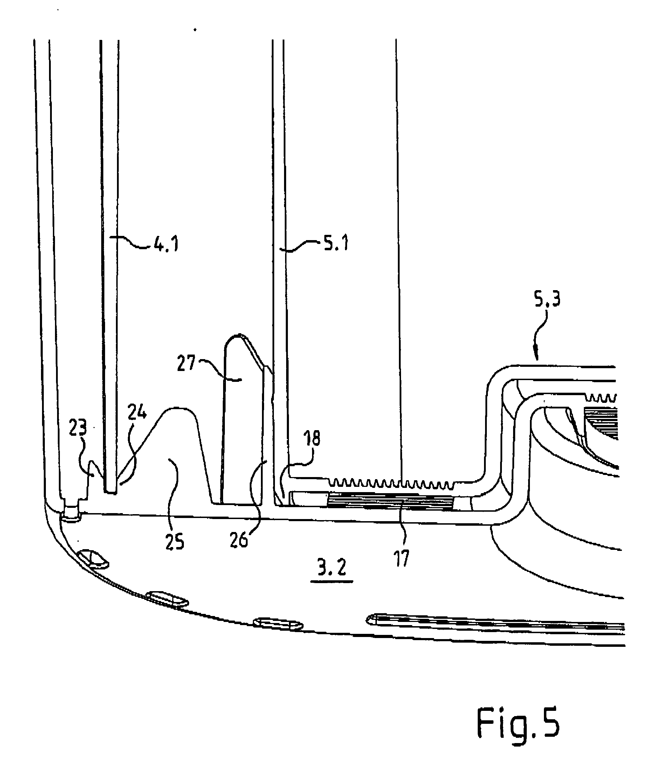

Der Zulauf des Rohwassers kann z. B. mittels der unteren und oberen Einlassöffnungen 6, 7 in eine der Aufstromkammer 13 stromaufwärts vorgelagerten Vorkammern 22 erfolgen. Aus dieser fließt, wie besser zu sehen in Figur 3, das Rohwasser über siebartige Durchlässe 21 zwischen der unteren Stirnseite der Wand 4.1 des Oberteils und dem Boden 3.2 (Figur 5) des Unterteils hindurch. Diese siebartig ausgebildeten Durchlässe 21 werden durch stegartige Abstandshalter für die Stirnseite der Wand 4.1 gegenüber dem Boden 3.2 definiert. Die Länge ergibt sich durch den Abstand der einzelnen Stege, auf denen die Stirnseite der Wand 4.1 des Oberteils aufsteht.

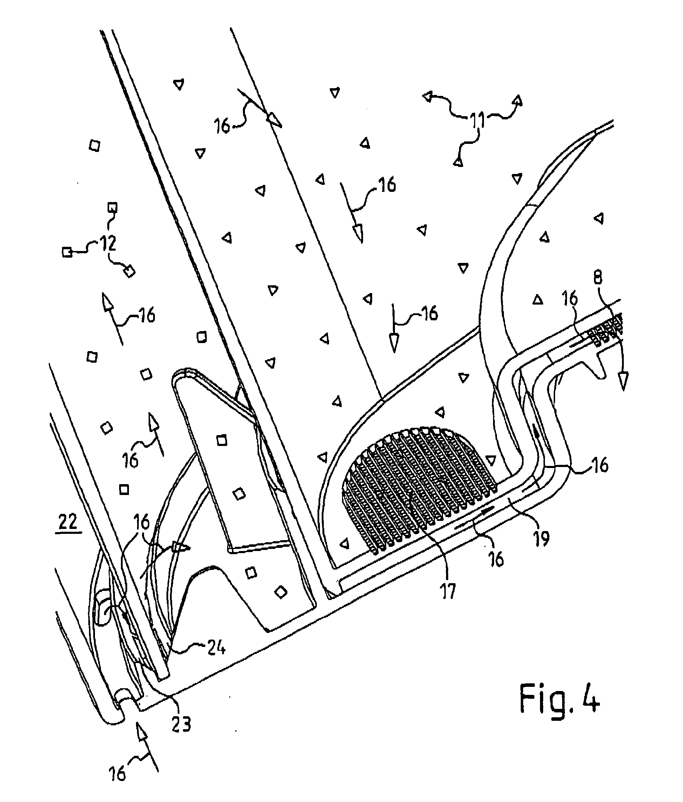

Die Durchflussbreite der Durchlässe wird durch den Abstand zwischen der Wand 4.1 des Oberteils und einem sie außen umgebenden Wulst 23 sowie einen sie innen umgebenden Wulst 24 bestimmt (vgl. Figur 4). In der Figur 4 ist im Weiteren die Strömungsführung zwischen der Auslassöffnung 17 der Innenkammer und der Auslassöffnung 8 über den Kanal 19 mit den darin eingezeichneten Pfeilen 16 besser erkennbar.

Weitere strukturelle Merkmale sind in der Figur 5 bezüglich einer Halterung der Wand 4.1 durch den im Boden 3.2 ausgebildeten Führungswulst 25 dargestellt.

Die Wand 5.1 der Innenkammer 5, ist demgegenüber so eng anliegend an der Innenseite eines vom Boden 3.2 abstehenden Flansches 26 angeordnet, dass sie hierdurch festgehalten ist. Zur Abstützung des Flansches 26 dienen mehrere rundum laufend verteilt angeordnete, vom Flansch 26 in etwa im rechten Winkel abstehende Stützelemente 27. Der Flansch 26 und die Wand 5.1 sind ausreichend gegeneinander abgedichtet, um einen Durchfluss an Rohwasser in einer nicht gewünschten Menge zu verhindern.

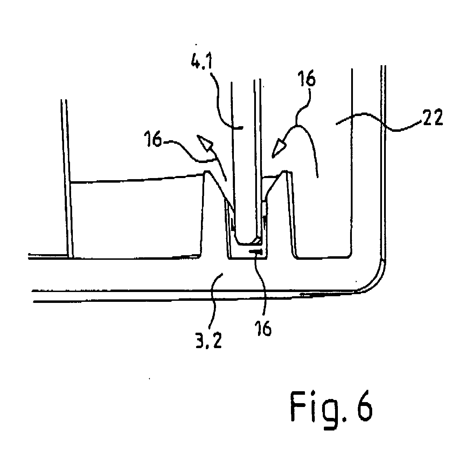

Zur weiter deutlicheren Hervorhebung des Einlass- bzw. Siebaufbaus im Zulaufbereich für die Aufstromkammer 13 ist eine entsprechend vergrößerte Darstellung eines Durchlasses 21 in der Figur 6 als Schnitt dargestellt. Auch hierin symbolisieren die Pfeile 16 die entsprechende Flussrichtung des Wassers.

Durch die erfindungsgemäße Kombination eines ersten, schwach sauren Kationentauschers 11 in Wasserstoffform mit mindestens einem zweiten Kationentauscher 12 in Natrium- oder Kaliumform kann eine deutliche Qualitätsverbesserung der hierdurch zubereiteten Getränke oder Speisen erzielt werden. Insbesondere vorteilhaft wirkt sich diese Qualitätsverbesserung beispielsweise bei der zubereitung von Tee aus.

In einer besonders bevorzugten Ausführungsform nimmt dabei der erste, Wasserstoffförmige Kationentauscher ein Volumen von 40 % bis 70 % des Filtermaterials ein. Beispielsweise könnte hierbei in einer besonders einfachen Ausführungsform lediglich eine Abstromkammer entsprechend mit Filtermaterial befüllt sein, bei der sich die bereits oben beschriebene Komprimierwirkung im Laufe der Betriebsdauer des Wasserfilters einstellt und somit für eine verlängerte Betriebsdauer eine vergleichsweise verbesserte bzw. gleichbleibendere Filterwirkung erzielt werden kann. Als beispielhafte Darstellung sei hierfür nochmals auf die Figur 2, insbesondere auf die Anordnung der Innenkammer 5, verwiesen.

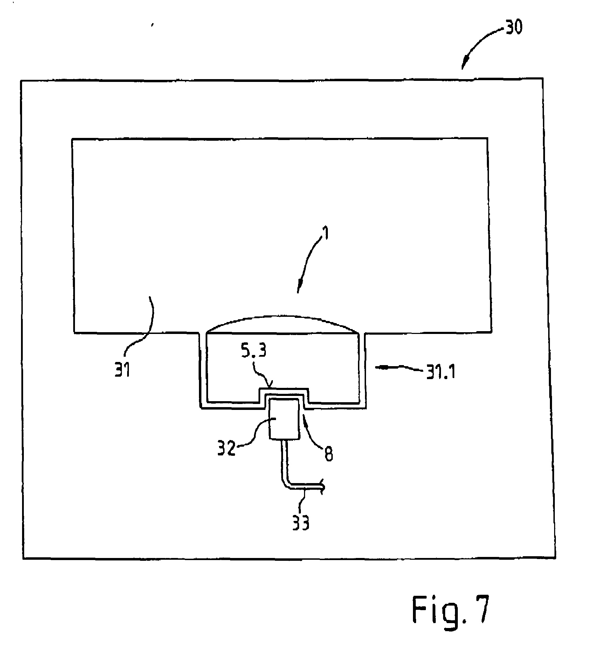

Zur graphischen Offenbarung der Erfindung zeigt die Figur 7 ein Teeaufbereitungsgerät 30 mit einem Wassertank 31 und einem darin befindlichen Wasserfilter 1. Der zur Bevorratung von durch die Filterpatrone 1 aufzubereitendem Trinkwasser vorgesehene Tank 31 weist eine Tankvertiefung 31.1 auf. Diese dient als tiefster Punkt im Tank zur Filteraufnahme und stellt damit sicher, dass der Filter und damit das darin befindliche Filtermaterial so lange wie möglich mit Wasser bedeckt ist. Hierdurch kann ein zusätzlicher Schutz des Filtermaterials vor Austrocknen bewirkt werden. Ein weiterer Schutz gegen Austrocknen des Filtermaterials kann durch die Strömungsführung im Inneren des Wasserfilters dadurch erreicht werden, dass zumindest ein kleines Wasser-Stauvolumen vorgesehen ist. Dieses ist beispielsweise entsprechend der Höhe des Filterauslaufelementes in der Figur 2 im Filterinneren realisiert.

### Bezugszeichenliste:

- 1: Wasserfilter
- 2: Gehäuse
- 3: Unterteil
- 4: Oberteil
- 5: Innenkammer / Abstromkammer
- 6: Untere Einlassöffnung
- 7: Obere Einlassöffnung
- 8: Auslassöffnung
- 9: Handhabungselement
- 10: Greiföse
- 11: Filtermaterial
- 12: Filtermaterial
- 13: Aufstromkammer
- 14: Überlauf
- 15: Don
- 16: Pfeile
- 17: Auslassöffnung
- 18: Distanzstück
- 19: Kanal
- 20: Verdichtungsbereich
- 21: Durchlass
- 22: Vorkammer
- 23: Wulst
- 24: Wulst
- 25: Wulst
- 26: Flansch
- 27: Stützelement
- 28: Komprimierungsmittel
- 30: Teeaufbereitungsgerät
- 31: Wassertank
- 31.1: Tankvertiefung/Filteraufnahme
- 32: geräteseitiger Filter und/oder Tankanschluss
- 33: Leitung

## Patentansprüche

1. Teeaufbereitungsgerät mit einem Wassertank und einem darin befindlichen Wasserfilter zur Aufbereitung von Trinkwasser mit einem Gehäuse und einem darin angeordneten Filtermaterial, **dadurch gekennzeichnet, dass** das Filtermaterial einen ersten, schwach sauren Kationentauscher in Wasserstoffform umfasst, der 30-70 % des Volumens an Ionenaustauschermaterial einnimmt und mindestens einen zweiten Kationentauscher in Natrium- oder Kaliumform umfasst, wobei das Filtermaterial in mindestens einer Filterkammer angeordnet ist.

2. Teeaufbereitungsmaschine nach Anspruch 1, **dadurch gekennzeichnet, dass** das Filtermaterial von dem Gehäuse fest umschlossen wird und wobei bei geschlossener Patrone ein Füllgrad von etwa ≥ 90 % vorgesehen ist, insbesondere ein Füllgrad von etwa ≥ 95 %.

3. Teeaufbereitungsmaschine nach einem der vorgenannten Ansprüche, **dadurch gekennzeichnet, dass** sie einen Sauganschluss zum Ansaugen von Wasser aus dem Wassertank mit Mitteln zur Erzeugung eines Unterdrucks und einen Filteranschluss zum Anschluss des Wasserfilters im Inneren des Tanks aufweist.

4. Teeaufbereitungsmaschine nach einem der vorgenannten Ansprüche, **dadurch gekennzeichnet, dass** der Wasserfilter als Saugfilter ausgebildet ist.

5. Teeaufbereitungsmaschine nach einem der vorgenannten Ansprüche, **dadurch gekennzeichnet, dass** der tankseitige Sauganschluss des Wasserfilters im Bodenbereich oder unteren Bereich des Wasserfilters angeordnet ist.

6. Teeaufbereitungsmaschine nach einem der vorangehenden Ansprüche, **dadurch gekennzeichnet, dass** der erste Kationentauscher in einer im Abstrom betriebenen Filterkammer angeordnet ist.

7. Teeaufbereitungsmaschine nach einem der vorangehenden Ansprüche, **dadurch gekennzeichnet, dass** der erste Kationentauscher in einer im Aufstrom betriebenen Filterkammer angeordnet ist.

8. Teeaufbereitungsmaschine nach einem der vorangehenden Ansprüche, **dadurch gekennzeichnet, dass** das Volumen der im Abstrom arbeitenden Filterkammer im Wasserfilter einen Anteil von > 40 % von dem aus Aufstrom- und Abstromfilterkammer gebildeten Gesamtvolumen einnimmt.

9. Teeaufbereitungsmaschine nach einem der vorangehenden Ansprüche, **dadurch gekennzeichnet, dass** im Wasserfilter bis zu 70 % der aktiven Gruppen im Gemisch aus Natrium und/oder Kalium beladenem schwachsauren Kationentauscher gebildet werden.

10. Teeaufbereitungsmaschine nach einem der vorangehenden Ansprüche, **dadurch gekennzeichnet, dass** Komprimierungsmittel für wenigstens einen der beiden Kationentauscher im Wasserfilter vorgesehen sind.

11. Teeaufbereitungsmaschine nach einem der vorangehenden Ansprüche, **dadurch gekennzeichnet, dass** einer der beiden Kationentauscher im Wasserfilter als Komprimierungsmittel für die durch ihn und/oder den durch den anderen Kationentauscher gebildete Filterstrecke ausgebildet ist.

12. Teeaufbereitungsmaschine nach einem der vorangehenden Ansprüche, **dadurch gekennzeichnet, dass** das Filtermaterial im Wasserfilter in einer ersten Filterkammer so angeordnet ist, dass es bei einer Volumenreduzierung des Filtermaterials in einer zweiten Filterkammer zur Wiederauffüllung des Volumens der zweiten Filterkammer Filtermaterial in die zweite Filterkammer nachgefüllt wird.

13. Teeaufbereitungsmaschine nach einem der vorangehenden Ansprüche, **dadurch gekennzeichnet, dass** eine Überlaufkante im Wasserfilter zwischen der ersten Filterkammer und der zweiten Filterkammer so ausgebildet ist, dass bei einer Volumenreduzierung des Filtermaterials in der zweiten Filterkammer zur Wiederauffüllung des Volumens der zweiten Filterkammer Filtermaterial aus der ersten Filterkammer in die zweite Filterkammer umgefüllt wird.

14. Teeaufbereitungsmaschine nach einem der vorangehenden Ansprüche, **dadurch gekennzeichnet, dass** das Filtervolumen etwa ein Höhe-zu-Breite-Verhältnis kleiner 1,0 aufweist.

15. Wasserfilter nach einem der vorangehenden Ansprüche, **dadurch gekennzeichnet, dass** er zum Einsatz in einer Teeaufbereitungsmaschine vorgesehen ist.
